# EUROPÄISCHE PATENTSCHRIFT

(11) **EP 3 722 144 B1**
(45) Veröffentlichungstag und Bekanntmachung des Hinweises auf die Patenterteilung: **01.02.2023**
(21) Anmeldenummer: 20163288.2
(22) Anmeldetag: 16.03.2020
(51) Int. Cl.: B60L 53/302

(54) **SYSTEM ZUM AUSTAUSCHEN ELEKTRISCHER ENERGIE**
ELECTRICAL POWER EXCHANGE SYSTEM
SYSTÈME D'ÉCHANGE DE L'ÉNERGIE ÉLECTRIQUE

(30) Priorität: 08.04.2019 DE 102019204957
(43) Veröffentlichungstag der Anmeldung: 14.10.2020
(73) Patentinhaber: Audi AG, 85045 Ingolstadt (DE)
(72) Erfinder: Ruppert, Daniel, 85101 Lenting (DE)

(56) Entgegenhaltungen:
- JP-A- 2013 134 033
- US-A1- 2017 174 086

## Beschreibung

Die Erfindung betrifft ein System zum Austauschen elektrischer Energie und ein Verfahren zum Austauschen elektrischer Energie.

Um ein Elektrofahrzeug mit elektrischer Energie zu versorgen, kann dessen Batterie an eine hierfür vorgesehene Ladestation angeschlossen werden.

Die Druckschrift DE 10 2017 201 541 A1 beschreibt ein Kraftfahrzeug mit wenigstens einer wiederaufladbaren Batterie, ein System aus einem Kraftfahrzeug und einer Ladestation und ein Verfahren zum Temperieren einer wiederaufladbaren Batterie eines Kraftfahrzeugs.

Eine Ladevorrichtung für ein Kraftfahrzeug ist aus der Druckschrift DE 10 2011 001 633 A1 bekannt.

Ein Kraftfahrzeug mit einem Mittel zum Übertragen von Wärme auf ein fahrzeugexternes Warmwassersystem, die beim Ladevorgang einer Traktionsbatterie entsteht, ist aus der Druckschrift DE 10 2016 004 851 A1 bekannt. Ein weiteres Beispiel für den Stand der Technik findet sich in den Dokumenten JP2013134033 und US2017174086.

Vor diesem Hintergrund war es eine Aufgabe, einen Ladevorgang zum Laden einer Batterie eines Fahrzeugs effizient zu gestalten.

Diese Aufgabe wird durch ein System und ein Verfahren mit den Merkmalen der unabhängigen Patentansprüche gelöst. Ausführungsformen des Systems und des Verfahrens gehen aus den abhängigen Patentansprüchen hervor.

Das erfindungsgemäße System ist zum Austauschen von elektrischer Energie zwischen einer elektrischen Energiequelle und einem elektrischen Energiespeicher, bspw. einer Batterie bzw. einem Akkumulator, eines Fahrzeugs ausgebildet und weist einen elektrischen Anschluss, der mit der elektrischen Energiequelle verbunden ist, mindestens ein elektronisches Bauteil und eine Kühlvorrichtung mit einem Wärmeübertragungsmedium auf. Falls der elektrische Energiespeicher des Fahrzeugs an dem elektrischen Anschluss angeschlossen ist bzw. wird und über das mindestens eine elektronische Bauteil zwischen der Energiequelle und dem elektrischen Energiespeicher elektrische Energie ausgetauscht wird, ist das Wärmeübertragungsmedium der Kühlvorrichtung dazu ausgebildet, Wärme bzw. Abwärme, die beim Austauschen der elektrischen Energie in dem System entsteht, einem mit dem System gekoppelten, außerhalb des Fahrzeugs in einem Gebäude angeordneten Abnehmer der Wärme bereitzustellen.

Das System ist in Ausgestaltung zum bidirektionalen Austauschen von elektrischer Energie dazu ausgebildet, elektrische Energie von der elektrischen Energiequelle zu dem elektrischen Energiespeicher zu übertragen und dabei den elektrischen Energiespeicher einerseits zu laden, aber auch elektrische Energie von dem elektrischen Energiespeicher zu der elektrischen Energiequelle zu übertragen und dabei den elektrischen Energiespeicher andererseits zu entladen. In der Regel ist der elektrische Energiespeicher beim Austauschen der elektrischen Energie über den elektrischen Anschluss und das mindestens eine Bauteil mit der elektrischen Energiequelle verbunden, die auch in dem Gebäude angeordnet und/oder mit dem Gebäude verbunden sein kann.

In dem System ist der elektrische Anschluss als Gleichstromanschluss bzw. Gleichspannungsanschluss dazu ausgebildet, elektrische Energie zwischen der elektrischen Energiequelle und dem elektrischen Energiespeicher des Fahrzeugs über einen Gleichstrom bzw. eine Gleichspannung auszutauschen.

Das System weist ein Gehäuse und/oder eine Wallbox als Ladestation auf, in dem bzw. in der zumindest teilweise mindestens ein Kühlkanal, bspw. Kühlkanäle bzw. eine entsprechende Kühlverschlauchung, der Kühlvorrichtung, die zum Transportieren und/oder Fördern des Wärmeübertragungsmediums ausgebildet ist, angeordnet ist bzw. sind, wobei die Kühlkanäle der Kühlvorrichtung zum Transport des Wärmeübertragungsmediums ausgebildet sind. Außerdem ist in dem Gehäuse das mindestens eine elektronische Bauteil angeordnet, das sich beim Austauschen der elektrischen Energie erwärmt. Weiterhin ist das mindestens eine elektronische Bauteil bspw. als Leistungshalbleiterschalter ausgebildet und liegt direkt an der Kühlvorrichtung, d. h. üblicherweise direkt an den Kühlkanälen, an. Außerdem weist das Gehäuse eine Rückwand auf, wobei die Kühlvorrichtung zumindest teilweise, ggf. vollständig in die Rückwand integriert ist, wobei die Kühlkanäle zumindest teilweise in der Rückwand angeordnet sind, und/oder wobei das mindestens eine elektronische Bauteil mit einem bzw. durch ein Isoliermaterial, bspw. Gap-Pad, von der Rückwand thermisch isoliert ist. Außerdem ist es möglich, dass das Gehäuse an einer Gebäudewand des Gebäudes angeordnet, anzuordnen und/oder anordenbar ist, wobei insbesondere die Rückwand direkt an der Gehäusewand angeordnet, anzuordnen und/oder anordenbar ist. Es ist denkbar, dass die Kühlkanäle elektronische Bauteile zumindest teilweise umschließen und/oder zwischen Bauteilen angeordnet sind. Dabei kann bspw. mindestens ein Kühlkanal zwischen der Rückwand und mindestens einem elektronischen Bauteil angeordnet sein. Alternativ oder ergänzend kann mindestens ein elektronisches Bauteil zwischen mindestens einem Kühlkanal und der Rückwand angeordnet sein. Die Rückwand kann mit dem Isoliermaterial beschichtet sein.

Ferner kann das System je nach Definition eine Wärmeübertragungseinrichtung aufweisen, die die Kühlvorrichtung und den im Gebäude angeordneten Abnehmer der Wärme des mindestens einen elektronischen Bauteils thermisch koppelt und/oder verbindet. Hierbei kann die Wärmeübertragungseinrichtung ebenfalls Kühlkanäle aufweisen, durch die das beim Austauschen der elektrischen Energie erwärmte Wärmeübertragungsmedium von der Kühlvorrichtung zu dem Abnehmer transportiert wird. Gekühltes Wärmeübertragungsmedium kann auch von dem Abnehmer über die Wärmeübertragungseinrichtung wieder zu der Kühlvorrichtung und somit auch zu dem mindestens einen zu kühlenden elektronischen Bauteil transportiert werden. Als Wärmeübertragungsmedium kann bspw. Wasser verwendet werden. Der Abnehmer der Wärme kann als sanitärer Wärmekreislauf bzw. Heizkreislauf des Gebäudes ausgebildet sein und ebenfalls das Wärmeübertragungsmedium, bspw. Wasser, fördern und/oder einem Nutzer bereitstellen. Je nach Definition kann auch die Wärmeübertragungseinrichtung als Teil des Wärmekreislaufs des Gebäudes ausgebildet sein.

Das System kann eine Leistungselektronik aufweisen, die das mindestens eine elektronische Bauteil, bspw. einen Leistungshalbleiter, aufweist und ebenfalls in dem Gehäuse angeordnet ist, wobei Kühlkanäle für das Wärmeübertragungsmedium mit der Leistungselektronik direkt verbunden sind, wobei das Wärmeübertragungsmedium dazu ausgebildet ist, Wärme der Leistungselektronik dem Abnehmer bereitzustellen.

Neben der Rückwand kann das Gehäuse für das System auch eine Vorderwand aufweisen, in der zumindest der elektrische Anschluss für den elektrischen Energiespeicher des Fahrzeugs angeordnet ist, der bspw. als Ladedose, als Steckdose und/oder als Steckbuchse ausgebildet ist bzw. bezeichnet werden kann, wobei der elektrische Anschluss wiederum mit dem mindestens einen elektronischen Bauteil in dem Gehäuse verbunden ist. Der elektrische Anschluss für den elektrischen Energiespeicher kann auch ein Kabel umfassen, an dessen Ende die Ladedose, die Steckdose und/oder die Steckbuchse angeordnet ist bzw. sind. Dabei ist es möglich, dass die Vorderwand eine Öffnung für das Kabel aufweist, durch die das Kabel geführt ist und das mindestens eine elektronische Bauteil in dem Gehäuse mit dem elektrischen Energiespeicher des Fahrzeugs verbinden kann.

Das erfindungsgemäße Verfahren ist zum Austauschen von elektrischer Energie zwischen einer elektrischen Energiequelle und einem elektrischen Energiespeicher, bspw. einem Akkumulator bzw. einer Batterie, eines Fahrzeugs mit einem System, bspw. einer Ausführungsform des voranstehend vorgestellten Systems, vorgesehen, das einen elektrischen Anschluss, mindestens ein elektronisches Bauteil und eine Kühlvorrichtung mit einem Wärmeübertragungsmedium aufweist. Falls der elektrische Energiespeicher des Fahrzeugs an dem elektrischen Anschluss angeschlossen wird bzw. ist und über das mindestens eine elektronische Bauteil zwischen der Energiequelle und dem elektrischen Energiespeicher elektrische Energie ausgetauscht wird, wird von dem Wärmeübertragungsmedium der Kühlvorrichtung Wärme, die beim Austausch der elektrischen Energie in dem System entsteht, einem mit dem System gekoppelten, außerhalb des Fahrzeugs in einem Gebäude angeordneten Abnehmer der Wärme bereitgestellt.

Bei einer Ausgestaltung des Verfahrens kann das Austauschen bzw. ein Austausch der elektrischen Energie zwischen der elektrischen Energiequelle und dem elektrischen Energiespeicher von einer Energieaustauschfunktion, bspw. einer Ladefunktion oder einer Entladefunktion, in Abhängigkeit eines Bedarfs des Abnehmers an Wärme intelligent kontrolliert, bspw. gesteuert und/oder geregelt werden.

Bei dem Verfahren wird die Kühlvorrichtung mit einer Warmwasseranlage des Gebäudes als Abnehmer der Wärme verbunden, wobei die Wärme bzw. Abwärme der Kühlvorrichtung von dem Wärmeübertragungsmedium, bspw. Wasser, zu der Warmwasseranlage übertragen wird. Dabei ist es möglich, dass die Kühlvorrichtung über eine Wärmeübertragungseinrichtung mit dem bspw. als Warmwasseranlage ausgebildeten Abnehmer der Wärme verbunden ist, wobei das Wärmeübertragungsmedium über bzw. durch die Wärmeübertragungseinrichtung zwischen der Kühlvorrichtung und dem Abnehmer transportiert und/oder ausgetauscht wird. Dabei können die Kühlvorrichtung, die Wärmeübertragungseinrichtung und der Abnehmer der Wärme einen bspw. geschlossenen Kreislauf für das Wärmeübertragungsmedium bilden. Der Abnehmer für die Wärme kann über die Wärmeübertragungseinrichtung mit dem System gekoppelt sein.

Der elektrische Energiespeicher des Fahrzeugs kann als Traktionsbatterie bezeichnet werden und dazu ausgebildet sein, einer Elektromaschine des Fahrzeugs elektrische Energie zum Antreiben bzw. zum Fortbewegen des Fahrzeugs bereitzustellen.

Es ist möglich, dass mit einer Ausführungsform des vorgestellten Verfahrens eine Ausführungsform des vorgestellten Systems realisiert und/oder mit einer Ausführungsform des vorgestellten Systems eine Ausführungsform des vorgestellten Verfahrens durchgeführt werden kann.

Mit dem System und/oder Verfahren kann ein "heat exchanger interface for a DC-Wallbox for electric car charging" realisiert werden. Dabei kann die Kühlvorrichtung als Wärmetauschschnittstelle zwischen dem mindestens einen elektrischen Bauteil, das beim Austauschen der elektrischen Energie erwärmt wird, und dem Abnehmer der entstandenen Wärme ausgebildet sein, wenn das elektrische Fahrzeug bzw. ein elektrisch angetriebenes Fahrzeug geladen oder entladen wird. Dabei kann der elektrische Anschluss als Stromschnittstelle, bspw. Gleichstromschnittstelle, für die auszutauschende elektrische Energie ausgebildet sein und/oder bezeichnet werden.

Das System umfasst die Kühlvorrichtung, die eine in der Rückwand des Gehäuses bzw. der DC-Wallbox eingelassene Kühlverschlauchung als Kühlkanäle aufweist. Ein thermischer Anschluss der Kühlkanäle bzw. der Kühlverschlauchung bzw. einer Kühlverrohrung ist an einer Seite bzw. Seitenwand des Gehäuses bzw. der DC-Wallbox angeordnet und durch die Seitenwand aus dem Gehäuse nach außen geführt, wobei die Kühlkanäle über den thermischen Anschluss mit dem Abnehmer der Wärme bspw. direkt oder über eine Wärmeübertragungseinrichtung indirekt verbunden sein kann. Somit kann die DC-Wallbox durch Integration in den Wärmekreislauf und/oder durch den thermischen Anschluss an den sanitären Wärmekreislauf des Gebäudes, bspw. eines Hauses, gekoppelt werden und als zusätzlicher Wärmetauscher eingesetzt werden.

Eine Verlustleistung von ca. 1, 32 kW, die bei einem Laden bzw. Ladevorgang des elektrischen Energiespeichers entsteht, kann somit genutzt werden, um z. B. Frischwasser für das Gebäude zur erhitzen. Eine Voraussetzung hierfür ist, dass in einem Innenraum des Gehäuses bzw. der DC-Wallbox mindestens ein Bauteil einer Leistungselektronik als das mindestens eine elektronische Bauteil über die Rückwand mit der Kühlvorrichtung entwärmt wird und die Wärme an den Abnehmer hierfür übertragen kann. In der Regel umfasst das System mehrere in dem Gehäuse angeordnete Bauteile, die alle über die Rückwand entwärmt werden können. Dabei können z. B. Leistungshalbleiter als elektronische Bauteile direkt auf Rückwand angeordnet sein. Dabei ist es möglich, dass sich zwischen den Bauteilen und der Rückwand Isoliermaterial, bspw. mindestens ein Gap-Pad, befindet.

In Ausgestaltung wird die Abwärme des Gehäuses bzw. der Wallbox, üblicherweise die Abwärme von darin befindlichen elektronischen Bauteilen, zum Erwärmen des Abnehmers genutzt. Dabei kann mit der Abwärme bspw. Nutzwasser als Abnehmer in dem bspw. als Haus ausgebildeten Gebäude erwärmt werden. Alternativ oder ergänzend kann mit der Abwärme ebenso Wasser eines Heizkreislaufs, bspw. einer Fußbodenheizung, eines Heizkörpers bzw. eines Radiators, als Abnehmer in dem Gebäude erwärmt werden. Je nach Definition wird mit dem System, d. h. mit mindestens einer Komponente des Systems, ein Wärmetauscher bereitgestellt, der dazu ausgebildet ist, eine Verlustleistung, die beim Laden und/oder Entladen des elektrischen Energiespeichers des Fahrzeugs entsteht, zu nutzen. Hierbei resultiert die Wärme bzw. Abwärme aus der Verlustleistung. Somit kann die Verlustleistung als Abwärme für den Abnehmer in dem Gebäude genutzt werden.

Mit dem System kann in Ausgestaltung eine Schnittstelle bzw. eine entsprechende Vorrichtung für eine bidirektionale Ladestation, insbesondere eine Gleitstrom-Ladestation, bzw. die DC-Wallbox für eine private Heimanwendung realisiert werden. Das System bzw. die Vorrichtung dient dazu, die in der bidirektionalen DC-Wallbox bzw. in dem Gehäuse entstehende Verlustleistung in Wärme für einen Haushalt als Abnehmer in dem Gebäude nutzbar zu machen. Dabei kann das Laden oder Entladen bzw. ein Lade- oder Entladevorgang des Energiespeichers des Fahrzeugs abhängig von einem Wärmebedarf des Abnehmers, bspw. des Haushalts, gesteuert werden, wobei die beim Austauschen der elektrischen Energie entstehende Verlustleistung reduziert und ggf. vermieden wird. Das System und das Verfahren sind im Hinblick auf eine Bidirektionalität des Austausches der elektrischen Energie, die sowohl das Laden als auch das Entladen des Energiespeichers umfasst, für eine Verwertung der in dem Gehäuse bzw. der DC-Wallbox entstehenden Verlustleistung geeignet, da das vorgestellte System mindestens eine doppelte Betriebsdauer wie ein herkömmliches Ladesystem aufweist. Dabei unterscheidet sich der elektrische Anschluss bspw. von einer induktiven Bodenplatte, die zum berührungslosen Laden einer Batterie genutzt werden kann, da der als Komponente des Verfahrens vorgesehene elektrische Anschluss dazu ausgebildet ist, das System über eine drahtgebundene und/oder kabelgebundene Leitung bzw. Verbindung mit dem Energiespeicher zu verbinden. Aufgrund der vorgesehenen Bidirektionalität des Austauschens der elektrischen Energie, wobei eine bidirektionale Energiewandlung durchgeführt werden kann, kann sich ergeben, dass eine Anzahl an Betriebsstunden aber auch eine Verlustleistung verdoppelt werden. U. a. unter Nutzung der intelligenten Ladefunktion und/oder Entladefunktion kann die Verlustleistung bzw. die entsprechende Abwärme an einen Warmwasserkreislauf als Abnehmer des Gebäudes, bspw. des Hauses, übertragen werden, da das mindestens eine elektronische Bauteil, das sich beim Austauschen der elektrischen Energie erwärmt, an den besagten Abnehmer für die Wärme angeschlossen und/oder daran gekoppelt ist. Zusätzlich kann über die intelligente Ladefunktion das Laden bzw. der Ladevorgang abhängig von einem Warmwasserbedarf des Hauses gestartet und/oder gesteuert werden.

Mit dem Verfahren und dem System kann demnach der Lade- bzw. Entladevorgang des elektrischen Energiespeichers je nach Wärmebedarf, bspw. Warmwasserbedarf, des Haushalts des Gebäudes gesteuert werden. Das Gehäuse bzw. die DC-Wallbox des Systems kann auch privat genutzt werden, wobei das Gehäuse entweder an einer Außenwand oder an einer Innenwand, bspw. in einer Garage, des Gebäudes angeordnet sein kann. Insbesondere die Bidirektionalität des Austauschens der elektrischen Energie zwischen der Energiequelle und dem Energiespeicher kann sich erheblich auf eine Verwertung von Wärme, bspw. Verlustwärme, auswirken, da das System zum bidirektionalen Austausch der elektrischen Energie mindestens doppelt so viele Betriebsstunden wie ein System zum unidirektionalen Austausch der elektrischen Energie leistet, wobei bei dem unidirektionalen Austausch der elektrischen Energie lediglich ein Laden des elektrischen Energiespeichers jedoch kein Entladen des elektrischen Energiespeichers möglich ist.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.

Figur 1 zeigt in schematischer Darstellung eine erste Ausführungsform des erfindungsgemäßen Systems bei Durchführung einer ersten Ausführungsform des erfindungsgemäßen Verfahrens.

Figur 2 zeigt in schematischer Darstellung eine zweite Ausführungsform des erfindungsgemäßen Systems bei Durchführung einer zweiten Ausführungsform des erfindungsgemäßen Verfahrens.

Die Figuren werden zusammenhängend und übergreifend beschrieben, gleichen Komponenten sind dieselben Bezugsziffern zugeordnet.

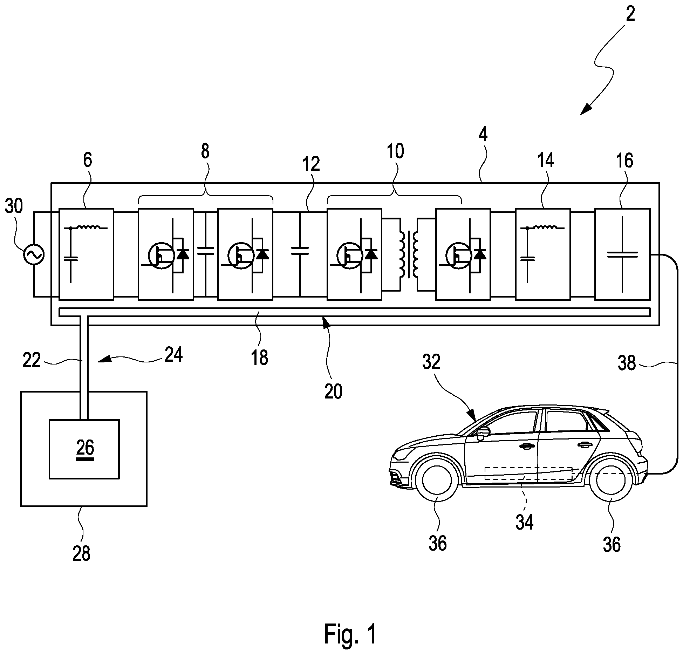

Die in Figur 1 schematisch dargestellte erste Ausführungsform des erfindungsgemäßen Systems 2 umfasst ein Gehäuse 4, das auch als Wallbox ausgebildet sein und/oder bezeichnet werden kann. In dem Gehäuse 4 sind mehrere elektronische Bauteile angeordnet, nämlich ein Eingangsfilter 6, ein erster Wandler 8 und ein zweiter Wandler 10, zwischen denen ein Kondensator 12 angeordnet bzw. geschaltet ist, ein Ausgangsfilter 14 und ein Anschluss 16. Dabei ist der erste Wandler 8 hier als bidirektionale Wechselstrom/Gleichstrom- bzw. AC/DC-Stufe (PFC) ausgebildet. Der zweite Wandler 8 ist hier als bidirektionale Gleichstrom/Gleichstrom- bzw. DC/DC-Stufe ausgebildet. Als weitere Komponenten des Systems 2 sind in Figur 1 ein erster Kühlkanal 18 einer Kühlvorrichtung 20 des Systems 2 gezeigt, der ebenfalls in dem Gehäuse 4 angeordnet ist. Außerdem umfasst das System 2 einen zweiten Kühlkanal 22 einer Wärmeübertragungseinrichtung 24, der bzw. die dazu ausgebildet ist, die Kühlvorrichtung 20 innerhalb des Gehäuses 4 mit einem Abnehmer 26 für Wärme bzw. Abwärme zu verbinden bzw. zu koppeln, der in einem Gebäude 28 bspw. in einem Haus, angeordnet ist. Außerdem zeigt Figur 1 eine elektrische Energiequelle 30, die hier als Wechselstromnetz (AC-Netz) ausgebildet ist. In Figur 1 ist weiterhin ein Fahrzeug 32 gezeigt, das elektrisch angetrieben werden kann und hierzu einen elektrischen Energiespeicher 34 aufweist, der bspw. als Batterie ausgebildet und/oder zu bezeichnen ist. Zum Fortbewegen des Fahrzeugs 32 wird elektrische Energie, die in dem Energiespeicher 34 gespeichert ist, einer Elektromaschine des Fahrzeugs 32 übermittelt, die wiederum dazu ausgebildet ist, die elektrische Energie in mechanische Energie umzuwandeln und dabei Räder 36 des Fahrzeugs 32 in Bewegung zu setzen.

Zum Betreiben des Fahrzeugs 32 ist u. a. vorgesehen, zwischen der elektrischen Energiequelle 30 und dem elektrischen Energiespeicher 34 des Fahrzeugs 32 elektrische Energie bidirektional auszutauschen, wobei es möglich ist, den Energiespeicher 34 zu laden aber auch zu entladen. Sowohl zum Laden als auch zum Entladen des Energiespeichers 34 wird dieser hier über eine elektrische Verbindung bzw. Leitung 38 an dem Anschluss 16 des Gehäuses 4 angeschlossen und somit über die besagten elektronischen Bauteile mit der elektrischen Energiequelle 30 verbunden. Zum Laden des Energiespeichers 34 wird elektrische Energie aus der Energiequelle 30, die zunächst als Wechselstrom bzw. Wechselspannung vorliegt, über die Bauteile in dem Gehäuse 4 in Gleichstrom bzw. eine Gleichspannung umgewandelt und dem Energiespeicher 34 über die Leitung 38 zur Verfügung gestellt. Beim Entladen des Energiespeichers 34 ist vorgesehen, zu entladende elektrische Energie, die zunächst als Gleichstrom bzw. Gleichspannung vorliegt durch die elektronischen Bauteile in dem Gehäuse 4 in Wechselstrom bzw. eine Wechselspannung umzuwandeln und der elektrischen Energiequelle 30 bereitzustellen.

Bei einem derartigen bidirektionalen Austauschen der elektrischen Energie zwischen der Energiequelle 30 und dem Energiespeicher 34 entsteht hier aufgrund eines Betriebs der elektronischen Bauteile Wärme bzw. Abwärme. Diese wird an ein hier flüssiges Wärmeübertragungsmedium, hier Wasser, innerhalb des ersten Kühlkanals 18 der Kühlvorrichtung übertragen, wobei das Wärmeübertragungsmedium entsprechend erwärmt wird. Dieses nunmehr erwärmte Wärmeübertragungsmedium wird weiterhin durch den zweiten Kühlkanal 22 der Wärmeübertragungseinrichtung zu dem Abnehmer 26, hier einer Warmwasserversorgung und/oder Heizung, des Gebäudes 28, übertragen.

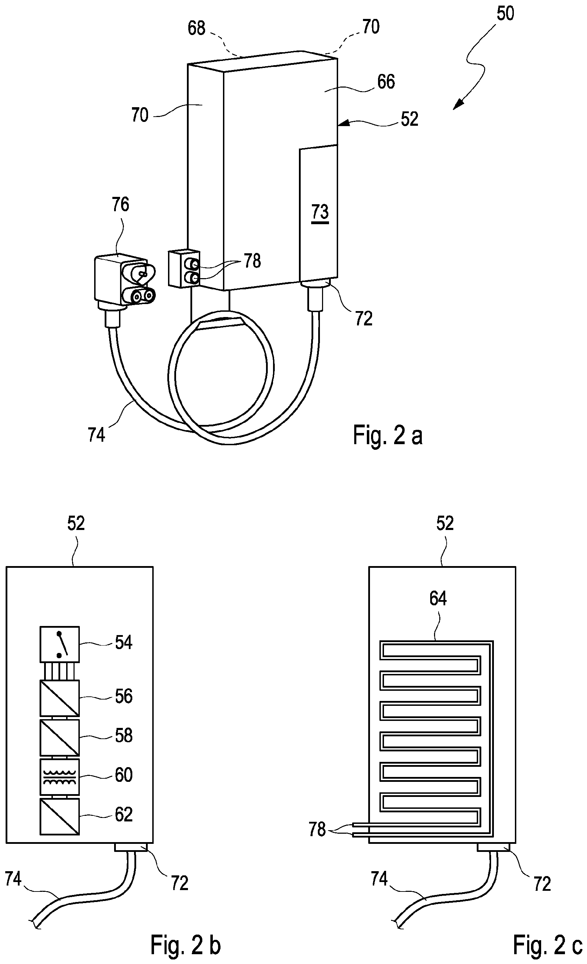

Die zweite Ausführungsform des erfindungsgemäßen Systems 50 ist in Figur 2a von außen dargestellt, wobei dieses System 50 hier ein Gehäuse 52 aufweist, das auch als sogenannte Wallbox bezeichnet werden kann. Figur 2b zeigt in schematischer Darstellung elektrische Bauteile in dem Gehäuse 52, hier einen Schalter 54, einen ersten Wandler 56, hier einen Wechselstrom/Gleichstrom-Wandler, einen zweiten Wandler 58, hier einen Gleichstrom/Wechselstrom-Wandler, einen Transformator 60 und einen dritten Wandler 62, der hier als Wechselstrom/Gleichstrom-Wandler ausgebildet ist. Wie weiterhin Figur 2c schematisch zeigt, ist in dem Gehäuse 52 auch ein hier mäanderförmiger Kühlmittelkanal 64 angeordnet, der als Teil einer Kühlvorrichtung des Systems 50 ausgebildet ist. Obwohl die elektronischen Bauteile und der Kühlkanal hier wegen der besseren Übersichtlichkeit in zwei getrennten Figuren 2b und 2c schematisch dargestellt sind, liegen die elektronischen Bauteile bei der hier vorgestellten Ausführungsform des Systems 50 innerhalb des Gehäuses 52 direkt an dem Kühlkanal 64 an.

Wie aus Figur 2a hervorgeht, weist das im Rahmen üblicher Fertigungstoleranzen weitgehend quaderförmige Gehäuse 52 des Systems 50 eine Vorderwand 66 und eine Rückwand 68 auf, die hier von dem Gehäuse 52 verdeckt ist. Die Vorderwand 66 und die Rückwand 68 sind hier über vier Seitenwände 70 des Gehäuses 52 miteinander verbunden. An der Vorderwand 66 des Gehäuses 52 sind hier ein Eingabegerät 73 und ein elektrischer Anschluss 72 angeordnet, an dem hier ein Kabel als elektrische Leitung 74 angeschlossen ist, an deren Ende eine Ladedose 76 angeordnet ist. Außerdem weist eine Seitenwand 70 des Gehäuses 52 auch einen thermischen Anschluss 78 auf, über den der Kühlkanal 64 innerhalb des Gehäuses 52 über eine nicht weiter dargestellte Wärmeübertragungseinrichtung mit einem Abnehmer für Wärme bzw. Abwärme verbunden ist, der in einem Gebäude, bspw. in einem Haus angeordnet ist. Dabei ist es möglich, das Gehäuse 52 an einer Wand des Gebäudes anzuordnen, wobei die Rückwand 68 des Gehäuses 52 direkt auf der Wand des Gebäudes angeordnet und die Vorderwand 66 der Wand des Gebäudes abgewandt wird.

Bei der zweiten Ausführungsform des erfindungsgemäßen Verfahrens ist vorgesehen, dass die elektronischen Bauteile innerhalb des Gehäuses 52 einerseits mit einer nicht weiter dargestellten elektrischen Energiequelle, bspw. einem Stromnetz, verbunden sind. Anderseits sind die elektronischen Bauteile über den Anschluss 72 und die Leitung 74 mit einem elektrischen Energiespeicher eines nicht weiter dargestellten Fahrzeugs verbunden. Bei der Ausführungsform des Verfahrens ist es möglich, zwischen dem elektrischen Energiespeicher des Fahrzeugs und der elektrischen Energiequelle über die elektronischen Bauteile bidirektional elektrische Energie auszutauschen und somit den elektrischen Energiespeicher sowohl mit elektrischer Energie aus der elektrischen Energiequelle zu laden als auch zu entladen und dabei elektrische Energie aus dem elektrischen Energiespeicher über die elektronischen Bauteile in dem Gehäuse 52 zu der elektrischen Energiequelle zu übertragen. Dabei entsteht sowohl beim Laden als auch beim Entladen aufgrund eines Betriebs der elektronischen Bauteile Wärme bzw. Abwärme, die von einem Wärmeübertragungsmedium in dem Kühlkanal 64 aufgenommen, in dem Wärmeübertragungsmedium gespeichert und durch das Wärmeübertragungsmedium, wenn es von dem Gehäuse 52 zu dem Abnehmer strömt bzw. fließt, diesem Abnehmer bereitgestellt wird.

Ein auch aus dem Stand der Technik bekanntes Elektrofahrzeug (BEV) kann eine Combo-Ladedose aufweisen, die ein Gleichstrom- bzw. DC-Laden bei 480 V und 150 kW aber auch ein Wechselstrom- bzw. AC-Laden bei 230 V oder 400 V und max. 220 kW ermöglicht. Viele Nutzer derartiger Elektrofahrzeuge laden ihre Elektrofahrzeuge im privaten Umfeld an einer Wechselstrom-Infrastruktur. Hierbei wandelt ein Onboard-Charger bzw. ein Ladegerät, das in dem Elektrofahrzeug angeordnet ist, eine bereitgestellte Wechselspannung in eine Gleichspannung für eine Traktionsbatterie des Elektrofahrzeugs, wobei bei einem dreiphasigen Drehstrom vom 32 A eine maximale Wechselstrom-Ladeleistung von 22 kW möglich ist.

Mit dem anhand der Ausführungsformen des Systems 2, 50 vorgestellten Gehäuse 4, 52 und den darin befindlichen elektronischen Bauteilen ist es jedoch möglich, dass ein Kunde einen Energiespeicher 34 seines Fahrzeugs 32 auch zu Hause und somit in einem Gebäude direkt mit Gleichstrom laden kann. In dem Gehäuse 4, 52 bilden die elektronischen Bauteile eine Leistungselektronik und eine Ansteuerelektronik, die dazu ausgebildet sind, die Wechselspannung der elektrischen Energiequelle 30, bspw. einer Netzinfrastruktur, in die Gleichspannung zu wandeln. Da die elektronischen Bauteile innerhalb des Gehäuses 4, 52 hier bidirektional ausgebildet und/oder aufgebaut sind, ist es auch möglich, den elektrischen Energiespeicher 34 zu entladen und dabei bereitgestellte elektrische Energie in die elektrische Energiequelle 30 einzuspeisen. Dabei beträgt eine Ladeleistung der in dem Gehäuse 4, 52 angeordneten elektronischen Bauteile max. 22 kW, wobei eine Anschlussleistung ebenfalls max. 22 kW betragen kann. Beim Stand der Technik erfolgt eine Kühlung einer derartigen Anordnung ausschließlich über Konvektion und/oder über Lüfter, die Luft durch die Leistungselektronik blasen und diese dabei kühlen.

Mit den vorgestellten Ausführungsformen des Systems 2, 50 und des Verfahrens ergibt sich gegenüber dem Stand der Technik, dass eine Verlustleistung, die beim Austauschen elektrischer Energie, d. h. beim Laden oder Entladen, bspw. beim Wandeln der elektrischen Energie von Gleichstrom zu Wechselstrom und umgekehrt, entsteht, in Wärme umgewandelt wird, die direkt in das Wärmeübertragungsmedium der Kühlvorrichtung 20, bspw. der Kühlkanale 22, 64, übertragen wird und somit nicht verloren geht.

Unabhängig von einer jeweiligen Schaltungstopologie der elektronischen Bauteile innerhalb des Gehäuses 4, 52, können diese ab einer Last ab 30% einen Wirkungsgrad von max. 94% erreichen. Dies würde bedeuten, dass bei einer Anschlussleistung von 22 kW (22 kW * 0,06) eine Verlustleistung von mind. 1, 32 kW entstehen kann. Dies kann bspw. bei einem vierstündigen Ladevorgang zu einer Verlustleistung von 4 * 1, 32 kW = 5, 28 kW führen. Bei einem bidirektionalen Austausch der elektrischen Energie kann eine derartige Verlustleistung zusätzlich auch beim Entladen des Fahrzeugs 32 entstehen. Bei einer jeweiligen Ausführungsform des erfindungsgemäßen Verfahrens wird jedoch diese Verlustleistung in Wärme und somit auch in Abwärme für den Abnehmer 26 in dem Gebäude 28 gewandelt.

In einer Ausgestaltung des Verfahrens wird eine Energieaustauschfunktion, d. h. eine Ladefunktion und/oder Entladefunktion, realisiert, mit der ein Austausch der elektrischen Energie zwischen der Energiequelle 30 und dem Energiespeicher 34 gesteuert werden kann. Dabei ist es möglich, diese Energieaustauschfunktion in Abhängigkeit eines Bedarfs des Abnehmers 26 an Wärme und/oder eines Bedarfs des elektrischen Energiespeichers 34 des Fahrzeugs 32 zu kontrollieren und somit zu steuern und/oder zu regeln. Wenn der elektrische Energiespeicher 34 des Fahrzeugs 32 an dem elektrischen Anschluss 16, 72 des Systems 2, 50 angeschlossen ist, kann bspw. von einem Nutzer bzw. Fahrer des Fahrzeugs 32 ein geplanter Abfahrtszeitpunkt für das Fahrzeug 32 und ein gewünschter Ladezustand (SOC, State of Charge) in das Eingabegerät 73 eingegeben werden, das bspw. in der Vorderwand des Gehäuses 4, 52 angeordnet sein, und mit einem bspw. in dem Gehäuse 4, 52 angeordneten Steuergerät zum Steuern einer jeweiligen Ausführungsform des Verfahrens verbunden sein kann. Hierbei kann der gewünschte Ladezustand bspw. ein Wunsch- Ladezustand prozentual, bspw. 100 % SOC eingegeben werden. Für den Abfahrtszeitpunkt wird ein Tag bzw. Kalendertag, ein Monat und ein Jahr (TT.MM.JJJJ) und eine Uhrzeit in Stunden und Minuten (SS.MM) eingegeben. Es ist möglich, eine derartige Eingabe auch über eine Anwendung bzw. App (Application) oder direkt in einem Fahrzeugmenü des Fahrzeugs 32 einzugeben. Hierzu ist es möglich, dass über die elektrische Verbindung bzw. Leitung 38 zwischen der Energiequelle 30 und dem Energiespeicher 34 nicht nur elektrische Energie transportiert wird, sondern auch Daten zwischen dem Fahrzeugmenü des Fahrzeugs 32 und dem Steuergerät des Systems ausgetauscht werden können.

Weiterhin ist es möglich, dass das Gehäuse 4, 52 bzw. die Wallbox als Ladeeinrichtung neben dem Steuergerät eine Kommunikationsschnittstelle bzw. Kommunikationseinrichtung zu einem Energiemanagement-System des Gebäudes 28 aufweist, wobei das Steuergerät über die Kommunikationsschnittstelle mit dem Energiemanagement-System bspw. über einen sogenannten Smart-Home-Server und/oder Datenaustausch über LAN oder W-LAN kommunizieren kann. Falls nun das Energiemanagement-System des Gebäudes 28 einen Bedarf an Wärme des darin angeordneten Abnehmers 26 registriert und/oder meldet, wenn bspw. ein Raum in dem Gebäude zu heizen oder Warmwasser zu erzeugen ist, so ist es dem Energiemanagement-System des Gebäudes 28 möglich, ein Laden bzw. einen Ladevorgang der elektrischen Energiequelle 30 des Fahrzeugs 32 zu starten. Hierzu kann das Energiemanagement-System über die Kommunikationsschnittstelle in dem Gehäuse 4, 52 mit einem Steuergerät des Fahrzeugs 32 indirekt oder auch direkt kommunizieren. Da die Energiequelle 30 bereits an dem elektrischen Anschluss 16, 72 angeschlossen ist, kann das Laden jederzeit bei Bedarf gestartet werden. Die dabei erzeugte Wärme aufgrund einer Verlustleistung der Energiewandlung wird dem Abnehmer 26 in dem Gebäude als Wärmebedarf zugeführt. Entsprechend ist es möglich, über das Energiemanagement-System des Gebäudes auch ein Entladen des elektrischen Energiespeichers 34 des Fahrzeugs 32 zu steuern, falls bspw. ein Energieüberschuss und ein zusätzlicher Bedarf an Wärme des Abnehmers vorhanden sind. Ein derartiger Energieüberschuss kann sich bspw. dann ergeben, wenn die Energie photovoltaisch bzw. über eine Photovoltaik-Anlage erzeugt wird. Zur Realisierung der Energieaustauschfunktion ist vorgesehen, dass das Energiemanagement-System des Gebäudes 28 als Soll-Werte den gewünschten Ladezustand und den geplanten Abfahrtszeitpunkt einhält und/ oder sicherstellt.

Weiterhin ist es möglich, dass der Fahrer bzw. der Nutzer des Fahrzeugs 32 ohne Eingabe eines gewünschten Ladezustands und Abfahrtszeitpunkts für den elektrischen Energiespeicher 34 ein Sofortladen oder Sofortentladen veranlasst. Hierbei wird die erzeugte Wärme aufgrund der Verlustleistung auch ohne expliziten Bedarf an Wärme des Abnehmers 26 und/oder des Energiemanagement-Systems des Gebäudes 28 dem Abnehmer 26, bspw. einer Warmwasseraufbereitung, zugeführt und somit genutzt.

### BEZUGSZIFFERN:

- 2: System
- 4: Gehäuse
- 6: Eingangsfilter
- 8, 10: Wandler
- 12: Kondensator
- 14: Ausgangsfilter
- 16: Anschluss
- 18: Kühlkanal
- 20: Kühlvorrichtung
- 22: Kühlkanal
- 24: Wärmeübertragungseinrichtung
- 26: Abnehmer
- 28: Gebäude
- 30: Energiequelle
- 32: Fahrzeug
- 34: Energiespeicher
- 36: Rad
- 38: Leitung
- 50: System
- 52: Gehäuse
- 54: Schalter
- 56, 58: Wandler
- 60: Transformator
- 62: Wandler
- 64: Kühlkanal
- 66: Vorderwand
- 68: Rückwand
- 70: Seitenwand
- 72: elektrischer Anschluss
- 73: Eingabegerät
- 74: Leitung
- 76: Ladedose
- 78: thermischer Anschluss

## Patentansprüche

1. System (2, 50) zum Austauschen elektrischer Energie zwischen einer elektrischen Energiequelle (30) und einem elektrischen Energiespeicher (34) eines Fahrzeugs (32), wobei das System (2, 50) einen elektrischen Anschluss (16, 72), mindestens ein elektronisches Bauteil und eine Kühlvorrichtung (20) mit einem Wärmeübertragungsmedium aufweist, wobei für den Fall, dass der elektrische Energiespeicher (34) des Fahrzeugs (32) an dem elektrischen Anschluss (16, 72) angeschlossen ist und zwischen der Energiequelle (30) und dem elektrischen Energiespeicher (34) über das mindestens eine elektronische Bauteil elektrische Energie ausgetauscht wird, das Wärmeübertragungsmedium der Kühlvorrichtung (20) dazu ausgebildet ist, Wärme, die beim Austausch der elektrischen Energie in dem System (2, 50) entsteht, einem mit dem System (2, 50) gekoppelten, in einem Gebäude (28) angeordneten Abnehmer (26) der Wärme bereitzustellen, **dadurch gekennzeichnet, dass** das System (2, 50) ein Gehäuse (4, 52) aufweist, in dem das mindestens eine elektronische Bauteil und die Kühlvorrichtung (20) angeordnet sind, wobei das Gehäuse (4, 52) eine Rückwand (68) aufweist, wobei die Kühlvorrichtung (20) und das mindestens eine elektronische Bauteil zumindest teilweise in die Rückwand (68) integriert sind, wobei das Gehäuse (4, 52) an einer Wand des Gebäudes (28) anzuordnen ist, wobei die Rückwand (68) des Gehäuses (4, 52) direkt auf der Wand des Gebäudes (28) angeordnet wird.

2. System (2, 50) nach Anspruch 1, das dazu ausgebildet ist, elektrische Energie von der elektrischen Energiequelle (30) zu dem elektrischen Energiespeicher (34) zu übertragen und elektrische Energie von dem elektrischen Energiespeicher (32) zu der elektrischen Energiequelle (30) zu übertragen.

3. System (2, 50) nach Anspruch 1 oder 2, bei dem der elektrische Anschluss (16, 72) als Gleichstromanschluss dazu ausgebildet ist, elektrische Energie zwischen der elektrischen Energiequelle (30) und dem elektrischen Energiespeicher (34) des Fahrzeugs (32) über Gleichstrom auszutauschen.

4. System (2, 50) nach einem der voranstehenden Ansprüche, bei dem das mindestens eine elektronische Bauteil direkt an der Kühlvorrichtung (20) anliegt.

5. System (2, 50) nach einem der voranstehenden Ansprüche, das eine aus dem mindestens einen elektronischen Bauteil gebildete Leistungselektronik aufweist, wobei das Wärmeübertragungsmedium dazu ausgebildet ist, Wärme der Leistungselektronik dem Abnehmer (26) bereitzustellen.

6. Verfahren zum Austauschen elektrischer Energie zwischen einer elektrischen Energiequelle (30) und einem elektrischen Energiespeicher (34) eines Fahrzeugs (32) mit einem System (2, 50), das einen elektrischen Anschluss (16, 72), mindestens ein elektronisches Bauteil und eine Kühlvorrichtung (20) mit einem Wärmeübertragungsmedium aufweist, wobei für den Fall, dass der elektrische Energiespeicher (34) des Fahrzeugs (32) an dem elektrischen Anschluss (16, 72) angeschlossen wird und zwischen der Energiequelle (30) und dem elektrischen Energiespeicher (34) elektrische Energie ausgetauscht wird, von dem Wärmeübertragungsmedium der Kühlvorrichtung (20) Wärme, die beim Austausch der elektrischen Energie in dem System (2, 50) entsteht, einem mit dem System (2, 50) gekoppelten, in einem Gebäude (28) angeordneten Abnehmer (26) bereitgestellt wird, **dadurch gekennzeichnet, dass** das System (2, 50) ein Gehäuse (4, 52) aufweist, in dem das mindestens eine elektronische Bauteil und die Kühlvorrichtung (20) angeordnet sind, wobei das Gehäuse (4, 52) eine Rückwand (68) aufweist, wobei die Kühlvorrichtung (20) und das mindestens eine elektronische Bauteil zumindest teilweise in die Rückwand (68) integriert sind, wobei das Gehäuse (4, 52) an einer Wand des Gebäudes (28) anzuordnen ist, wobei die Rückwand (68) des Gehäuses (4, 52) direkt auf der Wand des Gebäudes (28) angeordnet wird.

7. Verfahren nach Anspruch 6, bei dem das Austauschen der elektrischen Energie zwischen der Energiequelle (30) und dem elektrischen Energiespeicher (34) von einer Energieaustauschfunktion in Abhängigkeit eines Bedarfs des Abnehmers (26) an Wärme kontrolliert wird.

8. Verfahren nach Anspruch 6 oder 7, bei dem die Kühlvorrichtung (20) mit einer Warmwasseranlage des Gebäudes (28) als Abnehmer (26) der Wärme verbunden wird.

## Claims

1. System (2, 50) for exchanging electrical energy between an electrical energy source (30) and an electrical energy storage (34) of a vehicle (32), wherein the system (2, 50) has an electrical connection (16, 72), at least one electronic component and a cooling device (20) with a heat transfer medium, wherein in the case that the electrical energy storage (34) of the vehicle (32) is connected to the electrical connection (16, 72) and electrical energy is exchanged between the energy source (30) and the electrical energy storage (34) via the at least one electronic component, the heat transfer medium of the cooling device (20) is designed to supply heat generated during the exchange of electrical energy in the system (2, 50) to a consumer (26) of the heat, which consumer is coupled to the system (2, 50) and is arranged in a building (28), **characterised in that** the system (2, 50) has a housing (4, 52) in which the at least one electronic component and the cooling device (20) are arranged, wherein the housing (4, 52) has a rear wall (68), wherein the cooling device (20) and the at least one electronic component are at least partially integrated into the rear wall (68), wherein the housing (4, 52) is to be arranged on a wall of the building (28), wherein the rear wall (68) of the housing (4, 52) is arranged directly on the wall of the building (28).

2. System (2, 50) according to claim 1, which is designed to transfer electrical energy from the electrical energy source (30) to the electrical energy storage (34) and to transfer electrical energy from the electrical energy storage (32) to the electrical energy source (30).

3. System (2, 50) according to claim 1 or 2, in which the electrical connection (16, 72) is designed as a DC connection for exchanging electrical energy between the electrical energy source (30) and the electrical energy storage (34) of the vehicle (32) via direct current.

4. System (2, 50) according to any of the preceding claims, in which the at least one electronic component directly abuts the cooling device (20).

5. System (2, 50) according to any of the preceding claims, having a power electronics unit formed by the at least one electronic component, wherein the heat transfer medium is designed to provide heat from the power electronics unit to the consumer (26).

6. Method for exchanging electrical energy between an electrical energy source (30) and an electrical energy storage (34) of a vehicle (32) with a system (2, 50) which has an electrical connection (16, 72), at least one electronic component and a cooling device (20) with a heat transfer medium, wherein in the case that the electrical energy storage (34) of the vehicle (32) is connected to the electrical connection (16, 72) and electrical energy is exchanged between the energy source (30) and the electrical energy storage (34), the heat transfer medium of the cooling device (20) supplies heat generated during the exchange of electrical energy in the system (2, 50) to a consumer (26) which is coupled to the system (2, 50) and is arranged in a building (28), **characterised in that** the system (2, 50) has a housing (4, 52) in which the at least one electronic component and the cooling device (20) are arranged, wherein the housing (4, 52) has a rear wall (68), wherein the cooling device (20) and the at least one electronic component are at least partially integrated into the rear wall (68), wherein the housing (4, 52) is to be arranged on a wall of the building (28), wherein the rear wall (68) of the housing (4, 52) is arranged directly on the wall of the building (28).

7. Method according to claim 6, in which the exchange of electrical energy between the energy source (30) and the electrical energy storage (34) is controlled by an energy exchange function depending on a demand of the consumer (26) for heat.

8. Method according to claim 6 or 7, in which the cooling device (20) is connected to a hot water system of the building (28) as a consumer (26) of the heat.

## Revendications

1. Système (2, 50) pour échanger de l'énergie électrique entre une source d'énergie électrique (30) et un accumulateur d'énergie électrique (34) d'un véhicule (32), dans lequel le système (2, 50) présente une connexion électrique (16, 72), au moins un composant électronique et un dispositif de refroidissement (20) avec un milieu de transfert de chaleur, dans lequel, au cas où l'accumulateur d'énergie électrique (34) du véhicule (32) est connecté à la connexion électrique (16, 72) et que de l'énergie électrique est échangée entre la source d'énergie (30) et l'accumulateur d'énergie électrique (34) par l'intermédiaire de l'au moins un composant électronique, le milieu de transfert de chaleur du dispositif de refroidissement (20) est conçu pour fournir de la chaleur, qui est produite lors de l'échange de l'énergie électrique dans le système (2, 50), à un consommateur (26) de la chaleur couplé au système (2, 50) et disposé dans un bâtiment (28), **caractérisé en ce que** le système (2, 50) présente un boîtier (4, 52) dans lequel l'au moins un composant électronique et le dispositif de refroidissement (20) sont disposés, dans lequel le boîtier (4, 52) présente une paroi arrière (68), dans lequel le dispositif de refroidissement (20) et l'au moins un composant électronique sont au moins partiellement intégrés dans la paroi arrière (68), dans lequel le boîtier (4, 52) doit être disposé sur un mur du bâtiment (28), dans lequel la paroi arrière (68) du boîtier (4, 52) est disposée directement sur le mur du bâtiment (28).

2. Système (2, 50) selon la revendication 1, qui est conçu pour transférer de l'énergie électrique de la source d'énergie électrique (30) vers le dispositif de stockage d'énergie électrique (34) et pour transférer de l'énergie électrique du dispositif de stockage d'énergie électrique (32) vers la source d'énergie électrique (30).

3. Système (2, 50) selon la revendication 1 ou 2, dans lequel la connexion électrique (16, 72) est conçue en tant que connexion de courant continu pour échanger de l'énergie électrique entre la source d'énergie électrique (30) et le dispositif de stockage d'énergie électrique (34) du véhicule (32) par l'intermédiaire d'un courant continu.

4. Système (2, 50) selon l'une quelconque des revendications précédentes, dans lequel ledit au moins un composant électronique repose directement contre le dispositif de refroidissement (20).

5. Système (2, 50) selon l'une quelconque des revendications précédentes, qui présente un système électronique de puissance formé par l'au moins un composant électronique, dans lequel le milieu de transfert de chaleur est conçu pour fournir de la chaleur du système électronique de puissance au consommateur (26).

6. Procédé pour échanger de l'énergie électrique entre une source d'énergie électrique (30) et un accumulateur d'énergie électrique (34) d'un véhicule (32) avec un système (2, 50), qui présente une connexion électrique (16, 72), au moins un composant électronique et un dispositif de refroidissement (20) avec un milieu de transfert de chaleur, dans lequel, au cas où l'accumulateur d'énergie électrique (34) du véhicule (32) est connecté à la connexion électrique (16, 72) et que de l'énergie électrique est échangée entre la source d'énergie (30) et l'accumulateur d'énergie électrique (34), à partir du milieu de transfert de chaleur du dispositif de refroidissement (20), de la chaleur, qui est générée lors de l'échange de l'énergie électrique dans le système (2, 50), est fournie à un consommateur (26) couplé au système (2, 50) et disposé dans un bâtiment (28), **caractérisé en ce que** le système (2, 50) présente un boîtier (4, 52) dans lequel l'au moins un composant électronique et le dispositif de refroidissement (20) sont disposés, dans lequel le boîtier (4, 52) présente une paroi arrière (68), dans lequel le dispositif de refroidissement (20) et l'au moins un composant électronique sont au moins partiellement intégrés dans la paroi arrière (68), dans lequel le boîtier (4, 52) doit être disposé sur un mur du bâtiment (28), dans lequel la paroi arrière (68) du boîtier (4, 52) est disposée directement sur le mur du bâtiment (28).

7. Procédé selon la revendication 6, dans lequel l'échange de l'énergie électrique entre la source d'énergie (30) et le dispositif de stockage d'énergie électrique (34) est contrôlé par une fonction d'échange d'énergie en fonction d'un besoin en chaleur du consommateur (26).

8. Procédé selon la revendication 6 ou 7, dans lequel le dispositif de refroidissement (20) est connecté à une installation d'eau chaude du bâtiment (28) en tant que consommateur (26) de la chaleur.
